# EUROPEAN PATENT SPECIFICATION

(11) **EP 3 016 317 B1**
(45) Date of publication and mention of the grant of the patent: **03.05.2017**
(21) Application number: 15178096.2
(22) Date of filing: 23.07.2015
(51) Int. Cl.: H04L 12/24

(54) **MULTIPLE PROTOCOL SYSTEM MANAGEMENT**
SYSTEMMANAGEMENT MIT MEHRFACHPROTOKOLL
GESTION DE SYSTÈME À MULTIPLES PROTOCOLES

(30) Priority: 03.11.2014 US 201462074495 P; 09.01.2015 US 201514593774
(43) Date of publication of application: 04.05.2016
(73) Proprietor: Quanta Computer Inc., Taoyuan City 333 (TW)
(72) Inventor: CHOU, Le-Sheng, 333 Taoyuan City (TW); SHIH, Sz-Chin, 333 Taoyuan City (TW); LU, Wei-Ying, 333 Taoyuan City (TW)
(74) Representative: Michalski Hüttermann & Partner Patentanwälte mbB

(56) References cited:
- US-A1- 2013 254 566
- US-A1- 2014 280 814
- US-A1- 2014 280 837

## Description

### TECHNICAL FIELD

The disclosure generally relates to server system management.

### BACKGROUND

Conventional server systems have multiple components, such as storage devices, network interfaces, microprocessors, etc. These components generally communicate with a single service controller using a single protocol. A remote user may be able to control and/or query the status of a particular component of a server system over a network by using a protocol command associated with the protocol used by the service controller that communicates with the particular component.

US 2014280814 A1 describes an IPMI bridge server configured to expand the management functions of an IPMI control system to a plurality of non-IPMI protocol specific managed devices.

### SUMMARY

The invention is defined by the features of the independent claims. Preferred embodiments are defined by the features of the dependent claims.

In some implementations, service controllers of a computing device are associated with various disparate components of the computing device, and in response to a command issued to any one of the components, the service controllers may communicate with each other in order to transmit data responsive to the command. For example, a computing device may comprise a Baseboard Management Controller (BMC) and a Serial Attached SCSI Expander card (SAS Expander). The BMC of computing device receives a remote command requesting status of a hard drive coupled to the computing device, and the BMC communicates the command to the SAS Expander, for example over a system bus of the computing device. The SAS Expander retrieves a response to the command and communicates the response to the BMC, which then transmits the response to the remote site.

Particular implementations provide at least the following advantages: A remote user may be able to control and/or query the status of a particular component of a server system over a network by using a command normally associated with a protocol used by the service controller that communicates with the particular component.

Details of one or more implementations are set forth in the accompanying drawings and the description below. Other features, aspects, and potential advantages will be apparent from the description and drawings, and from the claims.

### DESCRIPTION OF DRAWINGS

FIG. 1 illustrates an example system for multiple protocol system management, according to some embodiments;
FIG. 2 is an example flow diagram illustrating multiple protocol system management, according to some embodiments;
FIG. 3 is an example flow diagram illustrating multiple protocol system management, according to some embodiments
FIG. 4 is an example process for multiple protocol system management, according to some embodiments;
FIG. 5 is a block diagram of an example system architecture implementing the features and processes of FIGS. 1-4.

Like reference symbols in the various drawings indicate like elements.

### DETAILED DESCRIPTION

Various embodiments of the present technology are discussed in detail below. While specific implementations are discussed, it should be understood that this is done for illustration purposes only. A person skilled in the relevant art will recognize that other components and configurations may be used without departing the scope of the present invention as defined by the appended claims .

Data centers may house hundreds to thousands of rack server systems, each rack server system ("rack system") having numerous computing systems (e.g., "servers") connected to it. These servers configured in the rack systems provide the backbone for the Internet. The servers execute applications integral to modern computing life, such as web servers, mail servers, database servers, etc.

These servers are comprised of numerous components, such as microprocessors, storage devices, storage adapters, memory modules, power supplies, fans, and other components known in the art. The servers operate under a high load, are comprised of numerous parts capable of reaching extreme temperatures assembled into a compact space, and are generally operating in proximity to numerous other servers, all of which combines to create tremendous amounts of heat, despite data centers generally being well-ventilated and cooled.

Because of their essential nature, significant resources are devoted to assuring that the rack systems, and by extension the servers connected within the rack systems, operate at a high uptime. In light of the extreme environment in which they operate, servers require regular maintenance and monitoring in order to accomplish this. Data centers may house hundreds to thousands of rack systems, and each rack system may contain anywhere from a few to dozens of servers, in addition to potentially hundreds of storage devices, along with power supplies, fans, etc.

Administration, monitoring, and maintenance is rendered difficult by the sheer number of systems contained in a potentially huge data center. Thus, a great deal of monitoring (e.g., monitoring temperature of components) and maintenance (e.g., restarting a server, adjusting fan speeds, etc.) is performed by remote administration. An administrator, either on-site at the data center or remote, may connect to a network and then to individual rack systems and servers located in the data center. Through this network connection, an administrator may issue commands and requests for data to the rack systems and servers, and receive responses over the network connection.

Conventional servers have dedicated microcontroller modules, often located on the motherboard of a server, such as a baseboard management controller (BMC), or on an expansion card such as a Serial Attached SCSI Expander card (SAS Expander), among others. Generally, a BMC module only supports communication with specific server hardware, such as fans, thermal sensors, BIOS, memory modules, etc. A SAS Expander module only supports communication with storage devices, such as hard drives, solid-state devices (SSD), and large arrays of hard drives in an enclosure, conventionally known in the art as a "JBOD," or "Just a Box of Disks." Additionally, while a BMC may operate "out-of-band," it some embodiments the SAS Expander does not. Therefore, using the BMC to facilitate communication with storage devices is useful. In some embodiments, standby power may be provided to a SAS Expander so it can provide information to the BMC over SMBUS.

Because of the divide between responsibilities handled by a BMC and a SAS Expander, administrators have to utilize separate protocols to communicate with the BMC and the SAS Expander in order to perform maintenance on and transmit requests for data from disparate components, which is inefficient and time-intensive. Administrators may only be familiar with one of the protocols and not desire to learn the intricacies of another in order to do full system management.

Thus, there is a need to provide an effective approach to allow administrators to use a single protocol to provide managerial control over disparate components of a server.

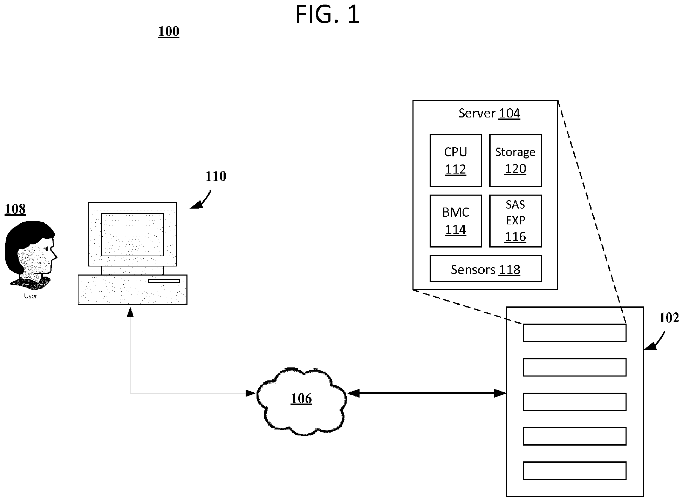

FIG. 1 illustrates an example system 100 for multiple protocol system management, according to some embodiments. In some implementation, system 100 can include server rack 102 that includes multiple servers 104. Each server 104 can include various components such as one or more central processing units (CPU) 112, one or more service controllers such as a BMC 114 and SAS Expander 116, one or more sensors 118, one or more storage devices 120, and other components known in the art but not shown, such as power supplies, fans, memory modules, etc. The approaches described herein are not limited to a particular service controller or set of service controllers.

CPU 112 can have multiple cores and be the main processor for server 104. In some embodiments, at least one of the servers 104 can include multiple CPUs 112. While reference is made herein to a "rack system," "server," "hard drive," "service controller" and the like, it should be understood that use of the singular in the examples herein does not preclude use of the plural in various implementations.

In some implementations, BMC 114 is a specialized microcontroller (microprocessor), usually embedded on the motherboard of a computer, generally a server. For example, BMC 114 manages the interface between system management software and platform hardware and monitors the physical state of server 104 using sensors and communicating with the system administrator 108 through an independent connection (e.g., out-of-band). BMC 114 is part of the intelligent platform management interface (IPMI) and can operate independently of CPU 112, Further, BMC 114 can operate even when CPU 112 is powered down and is powered off.

In some implementations, different types of sensors built into the server 104 report to BMC 114 on parameters such as temperature, cooling fan speeds, power status, operating system (OS) status, etc. For example, BMC 114 monitors the sensors and can send alerts to a system administrator 108 via a network 106 if any of the parameters for example do not stay within preset limits, indicating a potential issue with server 104. The administrator 108 can also remotely communicate over network 106 with BMC 114 to perform maintenance such as resetting or power-cycling server 104.

In some implementations, sensors are devices that can be monitored by IPMI through BMC 114. Devices may be virtual or real. Real devices can be connected directly to BMC 114 or via an interface bus like SMBus using the SSIF protocol, which according to an embodiment allows a BMC to communicate with a SAS Expender over the SMBUS. For example, BMC 114 provides a central, nonvolatile system event log (SEL). IPMI commands can read and clear the SEL. IPMI event messages can add entries to the SEL.

In some implementations, IPMI is a set of computer interface specifications for a computer system (e.g., server 104) that provides management and monitoring capabilities independently of the server CPU 112, firmware (e.g., BIOS or UEFI) and operating system. IPMI defines a set of interfaces used by system administrators for out-of-band management of servers 104 and operation monitoring. For example, IPMI provides a way to manage a powered-down or otherwise unresponsive server 104 by using network connection 106 to the hardware rather than to an operating system or login shell.

In some implementations, system administrator 108 can use IPMI messaging to monitor server 104 status (such as system temperatures, voltages, fans, power supplies and chassis intrusion), to query server inventory information, to review server logs of out-of-range conditions, as well as performing recovery procedures (e.g. system power-down and rebooting, or configuration), for example by issuing requests from a remote console 110 through network connection 106.

In some implementations, IPMI also allows for "side-band" management connections. For example, this utilizes a System Management Bus (SMBUS) interface (not shown) between the BMC 114 and a Network Interface Controller (NIC) of server 104. In some implementations, SMBUS is utilized to communicate between components comprising server 104. For example, BMC 114 may communicate with SAS Expander 116 using the SMBUS.

In some implementations, a SAS Expander 116 comprises a microcontroller, usually interposed on an expansion card, which facilitates communication between large numbers of Serial Attached SCSI (SAS) devices. For example, SAS Expander 116 may contain two or more ports. SAS Expander 116 may contain at least one SAS Management Protocol target port for management and may contain SAS devices itself. For example, SAS Expander 116 may include a Serial SCSI Protocol target port for access to a peripheral device, such as a hard drive.

In some implementations, Serial Attached SCSI (SAS) is a point-to-point serial protocol that moves data to and from computer storage devices such as hard drives. For example, data may be written to or read off of one or more hard drives utilizing the SAS protocol.

In some implementations, a protocol called SCSI Enclosure Services (SES) is utilized. For example, an administrator 108 can communicate with SCSI devices (e.g., hard drives) using a set of SCSI commands to access power, cooling, and other non-data characteristics of the SCSI devices.

In some implementations, SMBus System Interface (SSIF) allows local access to BMC 114 through the SMBUS. SSIF utilizes the SMBUS connection and is an interface bus. For example, SAS Expander 116 may transmit storage-related data to BMC 114 via SSIF.

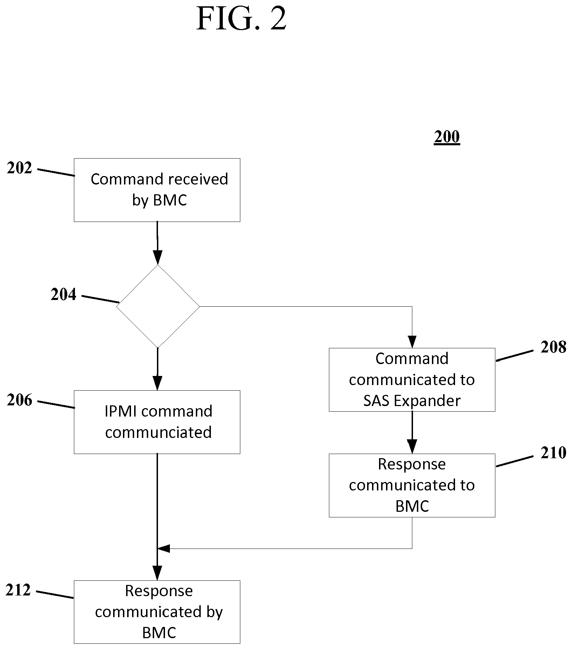

FIG. 2 is an example flow diagram 200 illustrating multiple protocol system management, according to some embodiments. At 202, a BMC of a server receives an IPMI command. For example, an IPMI command is used for server management, such as querying and/or controlling thermal sensors, fans, and power supplies, detecting CPU temperature, etc. A system administrator may remotely administer the server by issuing an IPMI command to a server over a network.

At 204, the BMC determines whether the command is associated with server management (e.g., a component traditionally associated with a BMC, such as power supplies, fans, motherboard components, etc.) or storage management (e.g., a component traditionally associated with a SAS Expander or other storage controller, such as a hard drive, JBOD, etc.). For example, the BMC could determine that the IPMI command is directed to controlling a fan speed, which would be server-related, or that the IPMI command is related to querying whether a hard drive has failed. In some embodiments, the IPMI (and/or a SES command) may be a modified and/or customized version of the IPMI (and/or SES) protocol.

As an example, a sample syntax of a SES command may be "sg_ses [options] DEVICE", with a sample command being "sg_ses -p 2 /dev/sgX". A sample syntax of an IPMI command may be "OOB command via Lan: (OEM cmd: 0xA0, HDD slot 0: 0x0, Get HDD info 0x01)", with a sample command being "ipmitool -H 192.168.0.1 -U admin -P admin raw 0x30 0xA0 0x0 0x01".

If the BMC determines that the IPMI command is directed to server management, then control passes to block 206, where the IPMI command is issued to the target component, for example using the SMBus.

If the BMC determines that the IPMI command is associated with storage management, then control passes to block 208, where the command is sent over the SMBUS to a component associated with storage, for example a SAS Expander. For example, SMBUS has an interrupt signal called SMBALERT#, which can be used by slaves to tell the host to ask its slaves about events of interest. In an embodiment, SMBUS has three pins for communication on which interrupt and other signals may be sent and received: clock, data, and alert. A SMBALERT# interrupt on the "alert" pin may be triggered by the BMC to notify SAS Expander to communicate the storage-related command to a slave device (e.g., a hard drive). This communication may comprise a SSIF package.

At 210, SAS Expander communicates a response to the storage-related command to the BMC, for example using the SSIF protocol. For example, the storage-related command may be to query the operational status of a hard drive. In another example, power to each of a plurality of hard drives (e.g., one or more hard drives comprising a JBOD) may be controlled separately through a command from the SAS Expander. In another example, information associated with a specific hard drive (e.g., one or more hard drives comprising a JBOD, one or more SSDs coupled to a server, etc.) may be accessed despite the server OS being nonoperational.

In some implementations, SAS Expander uses SSIF to communicate with the BMC. For example, SSIF utilizes the SMBUS connection to pass data from SAS Expander to the BMC.

At 212, a response to the initial IPMI command is returned to the requestor via IPMI. For example, a remote administrator sent an IPMI command to query a particular fan's speed. The command is determined to be a server-related command and the BMC retrieves data responsive to the IPMI command, which in this example is that the fan is operating at 2000 RPM. This data is sent back to the remote administrator over a network using the IPMI protocol.

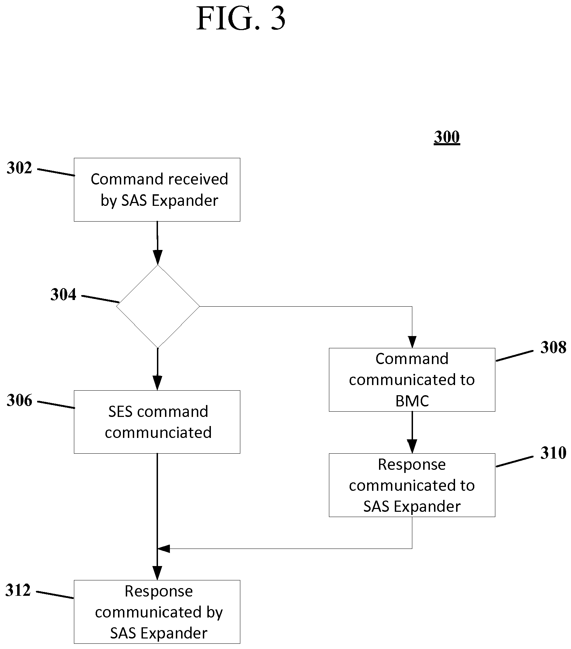

FIG. 3 is an example flow diagram 300 illustrating multiple protocol system management, according to some embodiments. At 302, a SAS Expander coupled to a server receives a SES command. For example, a SES command is used for storage management, such as querying and/or controlling hard drives SSDs, etc. A system administrator may remotely administer storage devices coupled to a server by issuing an SES command over a network to one or more storage devices coupled to a server.

At 304, the SAS Expander determines whether the command is associated with server management (e.g., a component traditionally associated with a BMC, such as power supplies, fans, motherboard components, etc.) or storage management (e.g., a component traditionally associated with a SAS Expander or other storage controller, such as a hard drive, JBOD, etc.). For example, the SAS Expander could determine that the SES command is directed to controlling a fan speed, which would be server-related, or that the SES command is related to querying whether a hard drive has failed.

If the SAS Expander determines that the SES command is directed to storage management, then control passes to block 306, where the SES command is issued to the target component, for example using the SAS protocol, and a response is received, as is known in the art.

If the SAS Expander determines that the SES command is associated with server management, then control passes to block 308, where the SES command requesting data is sent over the SMBUS to a component associated with server management, for example the BMC. In an embodiment, this command may be sent over the SMBUS alert pin, as described earlier, and the BMC may respond over the data pin using a SSIF package.

At 310, the BMC communicates a response to the server-related command to the SAS Expander. For example, the server-related command may be to query the operational status of a fan or to modify a BIOS setting. In another example, power to each of a plurality of hard drives (e.g., one or more hard drives comprising a JBOD) may be controlled separately through a command from the SAS Expander. In another example, a BIOS setting may be modified through the BMC even before the server OS is booted.

In some implementations, the BMC uses SSIF to communicate with the SAS Expander. For example, SSIF utilizes the SMBUS connection to pass data from the BMC Expander to the SAS Expander.

At 312, a response to the initial SES command is returned to the requestor via SES. For example, a remote administrator sent a SES command to query whether a particular hard drive has failed. The command is determined to be a storage-related command and the SAS Expander retrieves data responsive to the SES command, which in this example is that the hard drive has failed. This data is sent back to the remote administrator over a network using the SES protocol.

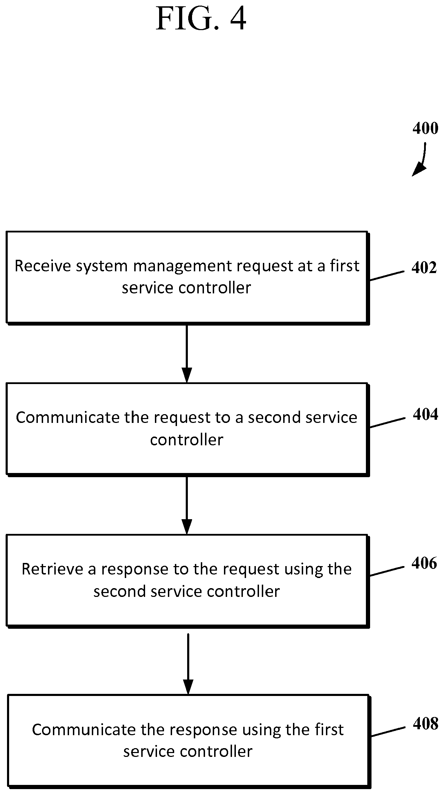

FIG. 4 is an example process 400 for multiple protocol system management, according to some embodiments. For example, process 400 can be performed by a service controller of a server, as described above. At step 402, a system management request is received at a particular service controller of a server, where the server has more than one service controller. For example, the server may have a BMC and a SAS Expander, and the system management request is an IPMI command to the BMC to check a status of a hard drive coupled to the server. Traditionally, a command to check a status of a hard drive coupled to the server would be a SES command directed to a SAS Expander, because in conventional approaches, a BMC cannot communicate commands to a storage device; however, using the techniques described herein, an administrator could use either IPMI or SES commands to manage an entire system.

At step 404, the system management request is communicated to the service controller that did not receive the request. For example, an IPMI command to the BMC to check a status of a hard drive is communicated to a SAS Expander service controller. This may be accomplished by, for example, utilizing a SMBUS of a server and a SSIF package. For example, SSIF may encapsulate IPMI messages and transfer them between the host controller and BMC using the SMBUS "write block" and "read block" protocols. As an example, the clock/data/alert pin interface of the SMBUS, as described earlier, may be utilized to facilitate the communication. In one example, a BMC is always accessed as a slave device through the SMBUS.

At step 406, a response to the system management request is retrieved using the service controller that did not receive the request. For example, an IPMI command to the BMC to check a status of a hard drive is communicated to a SAS Expander service controller, and the SAS Expander service controller retrieves the status from the hard drive. In another example, the SAS Expander may master the BMC to write data to the BMC, for example through a pin interface of the SMBUS. When the BMC has a response to the request, it signals the SAS Expander, for example by using the "alert" pin of the SMBUS, that the data is available. The SAS Expander may then master the SMBUS and perform a SMBUS "read block" command to pull the data responsive to the request from the BMC.

At step 408, the response is communicated using the service controller that received the system management request. For example, once the SAS Expander retrieves the hard drive status of the example described above, then the BMC communicates the response.

In some implementations, additional or alternate service controllers, or other components associated with or coupled to a server, may use the techniques described herein to facilitate communication between components that are associated with disparate protocols.

### Example System Architecture

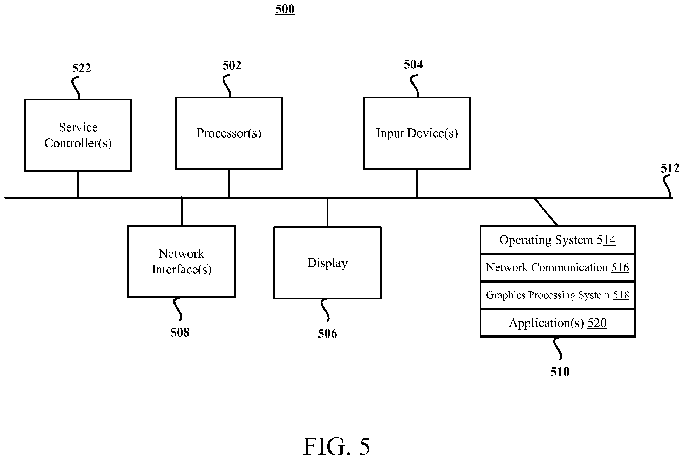

FIG. 5 is a block diagram of an example system architecture 500 implementing the features and processes of FIGS. 1-4. The architecture 500 can be implemented on any electronic device that runs software applications derived from compiled instructions, including without limitation personal computers, servers, smart phones, media players, electronic tablets, game consoles, email devices, etc. In some implementations, the architecture 500 can include one or more processors 502, one or more input devices 504, one or more display devices 506, one or more network interfaces 508 and one or more computer-readable mediums 510. Each of these components can be coupled by bus 512.

Display device 506 can be any known display technology, including but not limited to display devices using Liquid Crystal Display (LCD) or Light Emitting Diode (LED) technology. Processor(s) 502 can use any known processor technology, including but are not limited to graphics processors and multi-core processors. Input device 504 can be any known input device technology, including but not limited to a keyboard (including a virtual keyboard), mouse, track ball, and touch-sensitive pad or display. Input device 504 can include a power button for turning on and supplying power to processor(s) 502, display 506, network interfaces 508, and/or input devices 504. Bus 512 can be any known internal or external bus technology, including but not limited to ISA, EISA, PCI, PCI Express, NuBus, USB, Serial ATA or FireWire.

Computer-readable medium 510 can be any medium that participates in providing instructions to processor(s) 502 for execution, including without limitation, nonvolatile storage media (e.g., optical disks, magnetic disks, flash drives, etc.) or volatile media (e.g., SDRAM, ROM, etc.). Computer-readable medium 510 can provide instructions to one or more system controllers 522, for example. Alternatively, the instructions for Multiple Protocol System Management can be embedded in system controller(s) 522. The computer-readable medium (e.g., storage devices, mediums, and memories) can include, for example, a cable or wireless signal containing a bit stream and the like. However, when mentioned, non-transitory computer-readable storage media expressly exclude media such as energy, carrier signals, electromagnetic waves, and signals per se.

Computer-readable medium 510 can include various instructions for implementing an operating system 514 (e.g., Mac OS®, Windows®, Linux). Operating system 514 can be multi-user, multiprocessing, multitasking, multithreading, real-time and the like. Operating system 514 performs basic tasks, including but not limited to: recognizing input from input device 504; sending output to display device 506; keeping track of files and directories on computer-readable medium 510; controlling peripheral devices (e.g., disk drives, printers, etc.) which can be controlled directly or through an I/O controller; and managing traffic on bus 512. Network communications instructions 516 can establish and maintain network connections (e.g., software for implementing communication protocols, such as TCP/IP, HTTP, Ethernet, etc.).

A graphics processing system 518 can include instructions that provide graphics and image processing capabilities. For example, the graphics processing system 518 can implement the processes described with reference to FIGS. 1-4. Application(s) 520 can be an application that uses or implements the processes described in reference to FIGS. 1-4. The processes can also be implemented in operating system 514.

System controller(s) 522 can be one or more service controllers that operate independently of processor(s) 502 and/or operating system 514. In some implementations, system controller(s) 522 can be powered and operational before processor(s) 502 are powered on and operating system 514 is loaded into processor(s) 502. For example, system controller(s) 522 can provide for pre-OS management of the computing device through a dedicated network interface or other input device. For example, system controller 522 can be a baseboard management controller (BMC) that monitors device sensors (e.g., voltages, temperature, fans, etc.), logs events for failure analysis, provides LED guided diagnostics, performs power management, and/or provides remote management capabilities through an intelligent platform management interface (IMPI), keyboard, video, and mouse (KVM) redirection, serial over LAN (SOL), and/or other interfaces.

The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., Objective-C, Java), including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network. The relationship of client and server arises by virtue of computer programs running on the respective computers and having a client-server relationship to each other.

One or more features or steps of the disclosed embodiments can be implemented using an API. An API can define on or more parameters that are passed between a calling application and other software code (e.g., an operating system, library routine, function) that provides a service, that provides data, or that performs an operation or a computation.

The API can be implemented as one or more calls in program code that send or receive one or more parameters through a parameter list or other structure based on a call convention defined in an API specification document. A parameter can be a constant, a key, a data structure, an object, an object class, a variable, a data type, a pointer, an array, a list, or another call. API calls and parameters can be implemented in any programming language. The programming language can define the vocabulary and calling convention that a programmer will employ to access functions supporting the API.

In some implementations, an API call can report to an application the capabilities of a device running the application, such as input capability, output capability, processing capability, power capability, communications capability, etc.

A number of implementations have been described. Nevertheless, it will be understood that various modifications may be made. For example, other steps may be provided, or steps may be eliminated, from the described flows, and other components may be added to, or removed from, the described systems. Accordingly, other implementations are within the scope of the following claims.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A method comprising:
receiving a system management request at one of a first service controller (114) and a second service controller (116) of a computing device, wherein the computing device comprises at least the first service controller (114) and a second service controller (116);
determining, by the first service controller (114) receiving the system management request or the second service controller (116) receiving the system management request, whether the system management request is of a first type management or a second type management,
when the system management request is of the first type management and received by the second service controller, communicating the system management request to the first service controller (114);
when the system management request is of the second type management and received by the first service controller, communicating the system management request to the second service controller (116);
retrieving a response to the system management request, wherein the response is retrieved from the first service controller using the second service controller (116) based on determining that the system management request is of the second type management or retrieved from the second service controller using the first service controller (114) based on determining that the system management request is of the first type management; and
communicating the response using the first service controller (114) when the system management request is received by the first service controller (114) or using the second service controller (116) when the system management request is received by the second service controller (116).

2. The method of claim 1, wherein the system management request is communicated to the second service controller (116) over a System Management Bus.

3. The method of claim 1, wherein the system management request comprises an intelligent platform management interface command and/or a SCSI enclosure services command.

4. The method of claim 1, wherein the first service controller (114) is a Baseboard Management Controller (114) and/or the second service controller (116) is a Serial Attached SCSI Expander (116).

5. The method of claim 1, wherein the system management request is communicated using a first protocol, and the response to the system management request is communicated using the first protocol.

6. The method of claim 1, wherein the first type management is associated with server management and the second type management is associated with storage device management.

7. The method of claim 6, wherein the first type management is associated with the first service controller (114) and the second type management is associated with the second service controller (116).

8. A system (100) comprising:
at least one service controller (114, 116);
at least one storage device (120);
one or more processors (112); and
a computer-readable medium including one or more sequences of instructions which, when executed by the processor (112), cause:
receiving a system management request at one of a first service controller (114) and a second service controller (116) of a computing device, wherein the computing device comprises at least the first service controller (114) and the second service controller (116);
determining, by the first service controller (114) receiving the system management request or the second service controller (116) receiving the system management request, whether the system management request is of a first type management or a second type management;
when the system management request is of the first type management and received by the second service controller communicating the system management request to the first service controller (114);
when the system management request is of the second type management and received by the first service controller communicating the system management request to the second service controller (116);
retrieving a response to the system management request, wherein the response is retrieved from the first service controller using the second service controller (116) based on determining that the system management request is of the second type management or retrieved from the second service controller using the first service controller (114) based on determining that the system management request is of the first type management; and
communicating the response using the first service controller (114) when the system management request is received by the first service controller (114) or using the second service controller (116) when the system management request is received by the second service controller (116).

9. The system (100) of claim 8, wherein the first type management is associated with server management and the second type management is associated with storage device management.

10. The system (100) of claim 8, wherein the first service controller (114) comprises a BMC (114) and/or wherein the second service controller (116) comprises a SAS Expander (116).

11. The system (100) of claim 8, wherein the system management request comprises an intelligent platform management interface command and/or a SCSI enclosure services command.

## Patentansprüche

1. Verfahren mit den Schritten:
Empfangen einer Systemmanagementanforderung (System Management Request) an einem ersten Service Controller (114) oder einem zweiten Service Controller (116) einer Recheneinrichtung, wobei die Recheneinrichtung mindestens den ersten Service Controller (114) und den zweiten Service Controller (116) aufweist;
Bestimmen durch den ersten Service-Controller (114), der die Systemmanagementanforderung empfängt, oder durch den zweiten Service Controller (116), der die Systemmanagementanforderung empfängt, ob die Systemmanagementanforderung einen ersten Managementtyp oder einen zweiten Managementtyp betrifft,
Übertragen der Systemmanagementanforderung an den ersten Service Controller (114), wenn die Systemmanagementanforderung den ersten Managementtyp betrifft und durch den zweiten Service Controller empfangen wird;
Übertragen der Systemmanagementanforderung an den zweiten Service Controller (116), wenn die Systemmanagementanforderung den zweiten Managementtyp betrifft und durch den ersten Service Controller empfangen wird;
Abrufen einer Antwort auf die Systemmanagementanforderung, wobei die Antwort basierend auf der Bestimmung, dass die Systemmanagementanforderung den zweiten Managementtyp betrifft, unter Verwendung des zweiten Service Controllers (116) vom ersten Service Controller abgerufen wird, oder basierend auf der Bestimmung, dass die Systemmanagementanforderung den ersten Managementtyp betrifft, unter Verwendung des ersten Service Controllers (114) vom zweiten Service Controller abgerufen wird; und
Übertragen der Antwort unter Verwendung des ersten Service Controllers (114), wenn die Systemmanagementanforderung durch den ersten Service Controller (114) empfangen wird, oder unter Verwendung des zweiten Service Controllers (116), wenn die Systemmanagementanforderung durch den zweiten Service Controller (116) empfangen wird.

2. Verfahren nach Anspruch 1, wobei die Systemmanagementanforderung über einen System Management Bus an den zweiten Service Controller (116) übertragen wird.

3. Verfahren nach Anspruch 1, wobei die Systemmanagementanforderung einen IPMI- (Intelligent Platform Management Interface) Befehl und/oder einen SCSI-Enclosure-Services-Befehl enthält.

4. Verfahren nach Anspruch 1, wobei der erste Service Controller (114) ein Baseboard Management Controller (114) ist, und/oder wobei der zweite Service Controller (116) ein Serial Attached-SCSI-Expander (116) ist.

5. Verfahren nach Anspruch 1, wobei die Systemmanagementanforderung unter Verwendung eines ersten Protokolls übertragen wird, und wobei die Antwort auf die Systemmanagementanforderung unter Verwendung des ersten Protokolls übertragen wird.

6. Verfahren nach Anspruch 1, wobei der erste Managementtyp mit einem Server-Management und der zweite Managementtyp mit einem Speichereinrichtungsmanagement in Beziehung steht.

7. Verfahren nach Anspruch 6, wobei der erste Managementtyp mit dem ersten Service Controller (114) und der zweite Managementtyp mit dem zweiten Service Controller (116) in Beziehung steht.

8. System (100) mit:
mindestens einem Service Controller (114, 116);
mindestens einer Speichereinrichtung (120);
einem oder mehreren Prozessoren (112); und
einem computerlesbaren Speichermedium mit einem oder mehreren Befehlsfolgen, die, wenn sie durch den Prozessor (112) ausgeführt werden, die folgenden Schritte veranlassen:
Empfangen einer Systemmanagementanforderung an einem ersten Service Controller (114) oder einem zweiten Service Controller (116) einer Recheneinrichtung, wobei die Recheneinrichtung mindestens den ersten Service Controller (114) und den zweiten Service Controller (116) aufweist;
Bestimmen durch den ersten Service-Controller (114), der die Systemmanagementanforderung empfängt, oder durch den zweiten Service Controller (116), der die Systemmanagementanforderung empfängt, ob die Systemmanagementanforderung einen ersten Managementtyp oder einen zweiten Managementtyp betrifft,
Übertragen der Systemmanagementanforderung an den ersten Service Controller (114), wenn die Systemmanagementanforderung den ersten Managementtyp betrifft und durch den zweiten Service Controller empfangen wird;
Übertragen der Systemmanagementanforderung an den zweiten Service Controller (116), wenn die Systemmanagementanforderung den zweiten Managementtyp betrifft und durch den ersten Service Controller empfangen wird;
Abrufen einer Antwort auf die Systemmanagementanforderung, wobei die Antwort basierend auf der Bestimmung, dass die Systemmanagementanforderung den zweiten Managementtyp betrifft, unter Verwendung des zweiten Service Controllers (116) vom ersten Service Controller abgerufen wird, oder basierend auf der Bestimmung, dass die Systemmanagementanforderung den ersten Managementtyp betrifft, unter Verwendung des ersten Service Controllers (114) vom zweiten Service Controller abgerufen wird; und
Übertragen der Antwort unter Verwendung des ersten Service Controllers (114), wenn die Systemmanagementanforderung durch den ersten Service Controller (114) empfangen wird, oder unter Verwendung des zweiten Service Controllers (116), wenn die Systemmanagementanforderung durch den zweiten Service Controller (116) empfangen wird.

9. System (100) nach Anspruch 8, wobei der erste Managementtyp mit einem Servermanagement in Beziehung steht und der zweite Managementtyp mit einem Speichereinrichtungsmanagement in Beziehung steht.

10. System (100) nach Anspruch 8, wobei der erste Service Controller (114) einen BMC (Baseboard Management Controller) (114) aufweist, und/oder wobei der zweite Service Controller (116) einen SAS-Expander (116) aufweist.

11. System (100) nach Anspruch 8, wobei die Systemmanagementanforderung einen IPMI- (Intelligent Platform Management Interface) Befehl und/oder einen SCSI-Enclosure-Services-Befehl enthält.

## Revendications

1. Procédé comprenant:
la réception d'une demande de gestion de système au niveau d'un premier dispositif de commande de service (114) et d'un second dispositif de commande de service (116) d'un dispositif informatique, où le dispositif informatique comprend au moins un premier dispositif de commande de service (114) et un second dispositif de commande de service (116) ;
la détermination, par le premier dispositif de commande de service (114) recevant la demande de gestion de système ou par le second dispositif de commande de service (116) recevant la demande de gestion de service, si la demande de gestion de service est une gestion d'un premier type ou une gestion d'un second type,
lorsque la demande de gestion de système est une gestion de premier type et est reçue par le second dispositif de commande de service, la communication de la demande de gestion de système au premier dispositif de commande de service (114) ;
lorsque la demande de gestion de système est une gestion de second type et est reçue par le premier dispositif de commande de service, la communication de la demande de gestion de système au second dispositif de commande de service (116) ;
la récupération d'une réponse à la demande de gestion de système, où la réponse est récupérée à partir du premier dispositif de commande de service
l'utilisation du second dispositif de commande de service (116) sur la base de la détermination si la demande de gestion de service est une gestion de second type ou est récupérée à partir du second dispositif de commande de service
l'utilisation du premier dispositif de commande de service (114) sur la base de la détermination si la demande de gestion de service est une gestion de premier type ; et
la communication de la réponse en utilisant le premier dispositif de commande de service (114) lorsque la demande de gestion de système est reçue par le premier dispositif de commande de service (114) ou l'utilisation du second dispositif de commande de service (116) lorsque la demande de gestion de système est reçue par le second dispositif de commande de service (116).

2. Procédé selon la revendication 1, dans lequel la demande de gestion de système est communiquée au second dispositif de commande de service (116) par le biais d'un bus de gestion de système.

3. Procédé selon la revendication 1, dans lequel la demande de gestion de système comprend une commande d'interface de gestion de plateforme intelligente et/ou une commande de services de boîtier SCSI.

4. Procédé selon la revendication 1, dans lequel le premier dispositif de commande de service (114) est un dispositif de contrôle de la gestion de la carte mère (114) et/ou le second dispositif de commande de service (116) est un expandeur SCSI attaché en série (116).

5. Procédé selon la revendication 1, dans lequel la demande de gestion de système est communiquée en utilisant un premier protocole, et la réponse à la demande de gestion de système est communiquée en utilisant le premier protocole.

6. Procédé selon la revendication 1, dans lequel la gestion de premier type est associée avec une gestion de serveur et la gestion de second type est associée avec une gestion de dispositif de stockage.

7. Procédé selon la revendication 6, dans lequel la gestion de premier type est associée avec le premier dispositif de commande de service (114) et la gestion de second type est associée avec le second dispositif de commande de service (116).

8. Système (100) comprenant :
au moins un dispositif de commande de service (114, 116) ;
au moins un dispositif de stockage (120) ;
un ou plusieurs processeurs (112) ; et
un support lisible par ordinateur comportant une ou plusieurs séquences d'instructions qui, lorsqu'elles sont exécutées par le processeur (112, assurent :
la réception d'une demande de gestion de système au niveau de l'un parmi un premier dispositif de commande de service (114) et un second dispositif de commande de service (116) d'un dispositif informatique, où le dispositif informatique comprend au moins le premier dispositif de commande de service (114) et le second dispositif de commande de service (116) ;
la détermination, par le premier dispositif de commande de service (114) recevant la demande de gestion de système ou par le second dispositif de commande de service (116) recevant la demande de gestion de système, si la demande de gestion de système est une gestion de premier type ou une gestion de second type ;
si la demande de gestion de système est une gestion de premier type et est reçue par le second dispositif de commande de service, la communication de la demande de gestion de système au premier dispositif de commande de service (114) ;
si la demande de gestion de système est une gestion de second type et est reçue par le premier dispositif de commande de service, la communication de la demande de gestion de système au second dispositif de commande de service (116) ;
la récupération d'une réponse à la demande de gestion de système, où la réponse est récupérée à partir du premier dispositif de commande de service
en utilisant le second dispositif de commande de service (116) sur la base de la détermination si la demande de gestion de service est une gestion de second type ou est récupérée à partir du second dispositif de commande de service,
en utilisant le premier dispositif de commande de service (114) sur la base de la détermination si la demande de gestion de service est une gestion de premier type ; et
la communication de la réponse en utilisant le premier dispositif de commande de service (114) lorsque la demande de gestion de système est reçue par le premier dispositif de commande de service (114) ou en utilisant le second dispositif de commande de service (116) lorsque la demande de gestion de système est reçue par le second dispositif de commande de service (116).

9. Système (100) selon la revendication 8, dans lequel la gestion de premier type est associée avec une gestion de serveur et la gestion de second type est associée avec une gestion de dispositif de stockage.

10. Système (100) selon la revendication 8, dans lequel le premier dispositif de commande de service (114) comprend un dispositif de contrôle de la gestion de la carte mère BMC (114) et/ou le second dispositif de commande de service (116) comprend un expandeur SCSI attaché en série SAS (116).

11. Système (100) selon la revendication 8, dans lequel la demande de gestion de système comprend une commande d'interface de gestion de plateforme intelligente et/ou une commande de services de boîtier SCSI.
